(19) **Europäisches Patentamt**
**European Patent Office**
**Office européen des brevets**

(11) **EP 2 514 786 B1**

(12) **EUROPEAN PATENT SPECIFICATION**

(45) Date of publication and mention
of the grant of the patent:
**15.02.2017 Bulletin 2017/07**

(21) Application number: **10837637.7**

(22) Date of filing: **15.12.2010**

(51) Int Cl.:
*C08J 9/12* (2006.01)    *B32B 5/32* (2006.01)
*B29C 44/06* (2006.01)    *B32B 27/42* (2006.01)
*B29C 44/24* (2006.01)    *B29C 44/30* (2006.01)
*C08G 8/10* (2006.01)    *B29C 44/22* (2006.01)
*B29C 44/04* (2006.01)    *C08J 9/14* (2006.01)
*C08G 101/00* (2006.01)    *B29C 44/32* (2006.01)
*B29C 44/46* (2006.01)    *C08G 14/08* (2006.01)
*C08L 61/34* (2006.01)

(86) International application number:
**PCT/JP2010/072572**

(87) International publication number:
**WO 2011/074611 (23.06.2011 Gazette 2011/25)**

(54) **PHENOLIC RESIN FOAMED PLATE AND METHOD FOR PRODUCING SAME**

GESCHÄUMTE PHENOLHARZPLATTE UND VERFAHREN ZU IHRER HERSTELLUNG

PLAQUE DE MOUSSE À BASE DE RÉSINE PHÉNOLIQUE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2009 JP 2009287625**

(43) Date of publication of application:
**24.10.2012 Bulletin 2012/43**

(73) Proprietor: **Asahi Kasei Construction Materials
Corporation
Tokyo 101-8101 (JP)**

(72) Inventors:
• **MIHORI Hisashi**
**Tokyo 101-8101 (JP)**

• **WATANABE Hirofumi**
**Tokyo 101-8101 (JP)**
• **SAITO Yuki**
**Tokyo 101-8101 (JP)**

(74) Representative: **Strehl Schübel-Hopf & Partner
Maximilianstrasse 54
80538 München (DE)**

(56) References cited:
**WO-A1-2009/066621    JP-A- 11 216 830
JP-A- 2007 070 506    JP-A- 2008 024 868
US-A- 3 511 789**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to a phenolic resin foamed plate and a method for producing the same.

**Background Art**

A phenolic resin foamed plate is generally produced by kneading a foamable phenolic resin composition (hereinafter also simply referred to as "a foamable resin composition") made of a phenolic resin, a blowing agent, a curing catalyst, and the like, discharging the mixture onto a surface material travelling at a constant speed, and thereafter shaping the mixture into a sheet between conveyors in a curing oven. Examples of a method using a plurality of discharge nozzles include a method of supplying linear strip-like material onto a surface material at prescribed intervals using a plurality of grooves (Patent Literature 1) and a method of distributing a plurality of channels, such as a method using a tournament-type distribution nozzle (Patent Literature 2).

**Citation List**

**Patent Literature**

[Patent Literature 1] Japanese Patent Application Laid-Open Publication No. 4-141406
[Patent Literature 2] Japanese Patent No. 3243571 US 3,511,789 discloses phenolic resin foams which can be produced by forming a layer of a foamable composition and heating the layer to a high temperature of about 180°C.

**Summary of Invention**

**Technical Problem**

However, the aforementioned method is a process of discharging a foamable resin composition onto only one side of the travelling surface material and the surface area per unit volume of a thick product is smaller as compared with a thin product. Therefore, when a high temperature condition is set for producing a foamed plate product at a high speed, the internally generated heat due to a curing reaction at a central portion in a thickness direction of the foamable resin composition is hardly dissipated to the outside in a foaming and curing step, so that the temperature inside the foamable resin composition excessively rises. As a result, cell membranes of the foamable resin composition are more likely to burst, resulting in a reduction of closed cell ratio and compressive strength as well as an increase of thermal conductivity, that is, a reduction of heat insulation performance of the foam. In the foamed plate produced by the process of discharging a foamable resin composition onto only one side of the travelling surface material, the density is higher in the main surface while the density is reduced toward the central portion in the thickness direction. In particular, in the case of a thick product, low-density regions gather in the central portion in the thickness direction, which may become a vulnerable point in terms of local breakage during compression.

Water produced during a curing process has to be dissipated. However, when the amount of foamable resin composition is large relative to the surface area of the foamed plate as in a thick product, the produced condensation water is less dissipated. If water is not dissipated enough, the heat insulation performance of the produced foamed plate is reduced, and the compressive strength is also reduced.

In order to produce a foamed plate while suppressing an excessive temperature increase inside the foamed plate due to a curing reaction of a foamable resin composition during foaming and curing, it is conceivable to set the heating temperature low during foaming and curing and extend the residence time in the heating oven. However, this is not desirable in view of cost and efficiency because the production speed becomes lower, and a production facility modification including increasing the length of the heating oven becomes necessary.

Japanese Patent Application Laid-Open Publication No. 59-005038 proposes a method of stacking phenolic resin foams in multiple levels. In this method, a foamable phenolic resin composition is additionally injected and foamed on a layer of a phenolic resin foam which is foamed in a mold having a sufficient depth, whereby the phenolic resin foams are integrally stacked to yield a molded product having the intended thickness. However, there are problems: for example, the water content generated by foaming and curing of the foamable resin composition injected to the second layer is hardly removed at the interface with the first layer; external heat cannot be utilized enough when the phenolic resin composition is injected, cured, and foamed on the first layer which is a heat insulation material; the adhesion strength at the interface between the first layer and the second layer is insufficient as a result of poor foaming at the interface with the first layer; and the interface is easily collapsed during compression.

The present invention aims to provide a phenolic resin foamed plate exhibiting practically sufficient compressive strength and thermal conductivity even when the product thickness is increased, and a method for producing the same.

**Solution to Problem**

The present invention provides the following [1] to [8].

[1] A phenolic resin foamed plate having a closed cell ratio equal to or greater than 80% and having a thickness of 60 to 180 mm, in which

when the phenolic resin foamed plate is cut along a main surface of the phenolic resin foamed plate in a thickness direction into five equal parts, which are designated as P1, P2, P3, P4, and P5 in order from the main surface, an average density $d_{p3}$ of P3 is higher than either of an average density $d_{p2}$ of P2 and an average density $d_{p4}$ of P4.

[2] The phenolic resin foamed plate according to [1], in which the total area of cells of 2 $mm^2$ or larger in a cross section vertical to the main surface of P3 is equal to or smaller than 70 $mm^2$/900 mm width.

[3] The phenolic resin foamed plate according to [1] or [2], in which the average density of the phenolic resin foamed plate as a whole is 10 to 100 $kg/m^3$.

[4] The phenolic resin foamed plate according to any one of [1] to [3], in which the thermal conductivity is 0.015 to 0.023 W/m.k.

[5] The phenolic resin foamed plate according to any one of [1] to [4], in which hydrocarbon is contained in a cell inside the phenolic resin foamed plate.

[6] A method for producing a phenolic resin foamed plate according to any one of [1] to [5], including: a step of introducing a foamable phenolic resin composition containing a phenolic resin, a blowing agent, and a curing catalyst into a first mold having an opening, and foaming the introduced phenolic resin composition in the first mold to obtain a foamable resin composition in a first foaming process; a step of introducing a foamable phenolic resin composition same as the foamable phenolic resin composition or a foamable phenolic resin composition different from the foamable phenolic resin composition into a second mold having an opening, and foaming the introduced phenolic resin composition in the second mold to obtain a foamable resin composition in a second foaming process; and a step of allowing foaming and curing of the foamable phenolic resin compositions in the first and second foaming processes to proceed in the first and second molds with the openings of the first and second molds joined, and bonding each foamable phenolic resin composition, integrating, and curing the integrated foamable phenolic resin compositions to obtain a phenolic resin foamed plate.

[7] A method for producing a phenolic resin foamed plate according to any one of [1] to [5], having one surface covered with a first surface material and another surface covered with a second surface material, the method including: continuously applying and foaming a foamable phenolic resin composition containing a phenolic resin, a blowing agent, and a curing catalyst on opposing surfaces of the first and second surface materials traveling in a same direction at a prescribed distance from each other, and bonding a foamable resin composition surface in a foaming process that is grown from the first surface material side and a foamable resin composition surface in a foaming process that is grown from the second surface material side to each other to be integrated as a whole and cured.

[8] The method for producing a phenolic resin foamed plate according to [7], in which continuous application of the foamable phenolic resin compositions on the opposing surfaces of the first and second surface materials is performed in first and second dies, respectively, and the first and second dies are each a die for discharging the foamable phenolic resin composition, supplied from a plurality of channels and resided within the die, in a shape of a sheet from a die lip discharge port.

As described above, the present phenolic resin foamed plate can be produced by arranging the foamable resin compositions separately foamed in the foaming process to be opposed to each other, and by foaming, curing, and bonding the foamable resin compositions such that the foam surfaces come into contact with each other. When the two foamable resin compositions in the foaming process are integrated at the central portion in the thickness direction of the foamed plate, the average density at the central portion in the thickness direction is higher than the adjacent portions in the thickness direction, and in addition, the uniformity of the density distribution is increased. Therefore, in the present phenolic resin foamed plate, the length in the thickness direction of a region where a low density portion is continuous is reduced, so that the start of local breakage at the low density portion is delayed, buckling hardly occurs, the compressive strength is good, and the bending strength is improved. As a method for producing such a foamed plate, according to a mold (batch-type) process, compositions are discharged (applied) into two molds, and foaming and curing is performed with the openings of the two molds joined, whereas according to a continuous process, foamable resin compositions are separately discharged onto the opposing surfaces of two surface materials being traveling. The foregoing problem is thus solved. In other words, both in the mold process and the continuous process, the two separate foamable resin compositions are discharged and foamed, and the foam surfaces are joined and bonded with each other. Accordingly, the internally generated heat during a curing reaction in the foaming and curing process can be dissipated efficiently. Therefore, it is possible to produce a high-quality foamed plate under efficient production conditions such as a high temperature condition, without giving damage to cell membranes of the foamable resin composition. As described above, in the present invention, it has been found that a density distribution structure characteristic in the thickness direction can be achieved by discharging and foaming two separate foamable resin compositions and thereafter joining and bonding the foam surfaces, and that this characteristic improves the compressive strength or the like of the foamed plate as compared with the conventional product.

**Advantageous Effects of Invention**

The present invention provides a phenolic resin foamed plate exhibiting practically sufficient compressive strength and thermal conductivity even when the product thickness is increased, and a method for producing the same.

**Brief Description of Drawings**

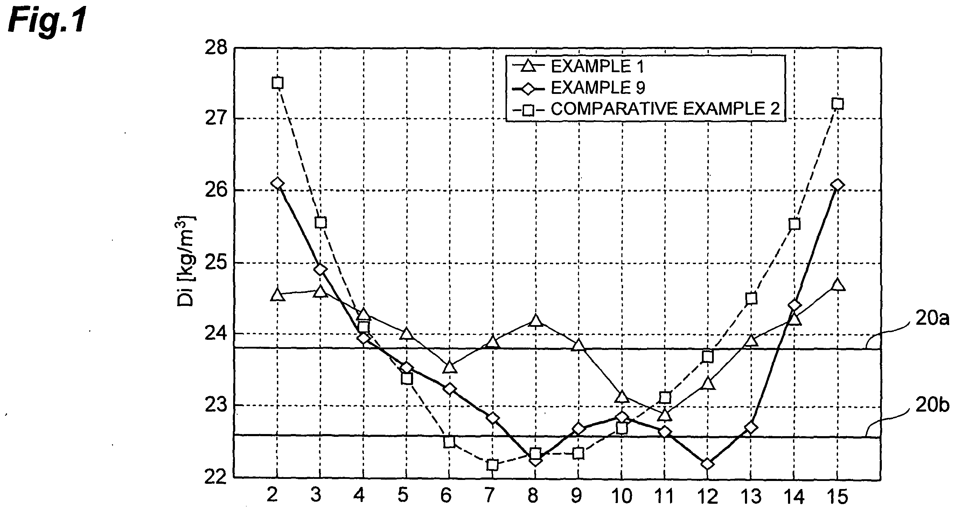

[Fig. 1] Fig. 1 is a diagram showing density distribution lines of phenolic resin foamed plates.
[Fig. 2] Fig. 2 is a view illustrating a layered structure in a phenolic resin foamed plate.
[Fig. 3] Fig. 3 is a diagram illustrating a method of producing a phenolic resin foamed plate using two traveling surface materials.

**Description of Embodiments**

The present invention will be described in detail below in conjunction with preferred embodiments thereof. In order to facilitate the understanding of description, the same components in the figures are denoted with the same reference numerals, if possible, and an overlapping description will be omitted. It is noted that the sizes in the figures may be partially exaggerated for the sake of explanation and are not always consistent with the actual scale.

A phenolic resin foamed plate (hereinafter also referred to as the "foamed plate") in the present embodiment is a foamed plate in which a large number of cells are present in a distributed state in a phenol resin formed through a curing reaction. The thickness of the foamed plate refers to a growth direction in which a foamable resin composition on a surface is foamed, and refers to a side having the smallest size of three sides of the foamed plate. The foamed plate has a main surface which is a surface vertical to the thickness direction.

In the present phenolic resin foamed plate, low density regions and high density regions are present in the evaluation of density in the thickness direction, and the low density region is divided by the high density regions. Specifically, when five equal pieces divided in the thickness direction along the main surface of the foamed plate are designated as P1, P2, P3, P4, and P5 in order from the main surface, the average density of P3 is higher than the average density of P2 and the average density of P4. Since the average density of P3, which is an intermediate layer, is higher than the average density of P2 and the average density of P4, which are adjacent thereto in the thickness direction, P2 and P4 that are low density regions are divided from each other by P3 that is a high density region. In this manner, in the present phenolic resin foamed plate, the length in the thickness direction of a region in which a low density portion is continuous is short, so that the start of local breakage in a low density portion is delayed, buckling hardly occurs, the compressive strength is increased, and the bending strength is improved. The present foamed plate is also characterized in that a layer made of the same composition containing cells is continuous in the thickness direction from one main surface to the other main surface. The region in which cells are present in the present foamed plate as a whole is 80% or more, preferably 90% or more. In this manner, since the region in which cells are present is large, the present foamed plate has a high heat insulation performance.

To measure the average density, first, the foam is preferably sized such that the density is easily measured. For example, a portion from which the average density is to be measured (hereinafter referred to as "foamed plate cutout portion") is cut out in 75 mm x 75 mm x thickness from the foam. Then, the foamed plate cutout portion is sliced into five equal parts in the thickness direction in parallel with one main surface. The resultant pieces are marked as P1, P2, P3, P4, and P5 in order from the main surface. Here, P1 and P5 which include the main surface or the surface material are removed, and the average density of each of P2 to P4 is measured. The cutting method and cutting means here are not specifically limited. When five equal parts are sliced, a loss corresponding to the thickness of the cutting edge for slicing may be produced, and the resultant five pieces may slightly vary in thickness. However, this case is also handled as five equal sliced pieces.

Here, to find the average density $d_{pm}$, first, as for the thickness of the piece, the mean value ($T_m$) of the thicknesses is obtained by measuring the central portions of four sides of the main surface. The length in the width direction and the length in the length direction are measured each at two points, and the respective mean values ($W_m$, $L_m$) are obtained. Thereafter, the weight ($G_m$) of each piece is measured, and the average density ($d_{pm}$) of the piece is then obtained according to the equation (1) (m = 2 to 4).

$$d_{pm} = G_m/\{T_m \times W_m \times L_m\} \qquad (1)$$

In the phenolic resin foamed plate described above, it is preferable that cells having a size equal to or larger than 2 mm$^2$ (the cell in this size may also be referred to as "void") should be few in a cross section vertical to the main surface (cross section in the thickness direction) for the sliced P3. In the present foamed plate in this manner in which not many voids are present in the cross section in the thickness direction of P3 that is an intermediate layer, the closed cell ratio and the compressive strength tend to be high, and the bending strength tends to be improved. The thermal conductivity also tends to be reduced, that is, the heat insulation performance tends to be increased. Meanwhile, in the method as proposed in Japanese Patent Application Laid-Open Publication No. 59-005038 above, in which a molded product having the intended thickness is obtained by stacking phenolic resin foams by additionally injecting and foaming a foamable phenolic resin composition on a layer of a phenolic resin foam, the resultant foam has a large number of voids. When a thick foamed plate product is to be obtained at a high production speed under a high temperature condition, the internally generated heat due to a curing reaction at the central portion in the thickness direction of the foamable resin composition is hardly dissipated to the outside in the foaming and curing step, so that the temperature inside the foamable resin composition excessively rises. As a result, during foaming and curing, the cell membrane of the foamable resin composition easily bursts, resulting in a foam having a large number of voids.

As for a method of obtaining the total area of voids in the cross section vertical to the main surface of P3, in a similar manner as the measurement of average density as described above, first, a foamed plate cutout portion, cut out in 75 mm x 75 mm x thickness from the phenolic resin foamed plate, is sliced into five equal parts in the thickness direction along one main surface thereof. Then, a piece P3 corresponding to the central portion in the thickness direction is extracted. Here, the width of one cross section is 75 mm as described above. However, if the total area of voids, which are cells of 2 mm$^2$ or larger, is measured with only one cross section, the measurements greatly vary depending on the cutout portion, so that it is difficult to accurately evaluate the number of voids included in the foam. Then, additionally two foamed plate cutout portions are obtained, and in total, three pieces P3 are prepared. As the piece P3 has four vertical cross sections (corresponding to the side surfaces of the piece), the total area of voids of 2 mm$^2$ or larger, in the four vertical cross sections, is measured for each piece. With such measurement, it follows that the total area of voids is measured in the width of 75 mm (the width of one cross section) x 4 (the number of sections) x 3 (the number of pieces), that is, the width of 900 mm in total. Therefore, the total area of voids is represented as "mm$^2$/900 mm." Because of the evaluation in the 900 mm width in this manner, the total area of voids in cross section can be measured without a large deviation.

In the method described above, if it is difficult to recognize the presence of voids, a 200 % enlarged copy of the vertical cross section of the piece P3 may be produced to find the total area, which is then converted into the total area corresponding to the original scale. In a case where three pieces as described above cannot be prepared because of the size or shape of the foam, after measuring the thickness of the foam and slicing the foam into five equal parts in the thickness direction, the sample corresponding to the central portion in the thickness direction may be cut in a direction parallel to the thickness direction by the required number of times, and the total area of voids of 2 mm$^2$ or larger per 900 mm length vertical to the thickness direction may be obtained. It should be noted that a sufficient spacing is provided between cut surfaces so as not to cut one void through a plurality of sections and overestimate one void.

In the present phenolic resin foamed plate, it is preferable that the total area of voids, which are cells having a size equal to or greater than 2 mm$^2$, in the cross section vertical to the main surface of P3 be equal to or smaller than 70 mm$^2$/900 mm width. The case in which the total area is greater than 70 mm$^2$/900 mm width is undesirable because a problem is more likely to arise in practice, for example, separation easily occurs at the interface at which two foamable resin compositions are unified in the thickness direction of the foamed plate. The total area of voids is more preferably equal to or smaller than 60 mm$^2$/900 mm width, further more preferably equal to or smaller than 50 mm$^2$/900 mm width, and specifically preferably equal to or smaller than 40 mm$^2$/900 mm width. If equal to or smaller than 40 mm$^2$/900 mm width, sufficient integration is facilitated at the interface in the cross section vertical to the main surface of P3, and therefore the compressive strength is less affected by voids.

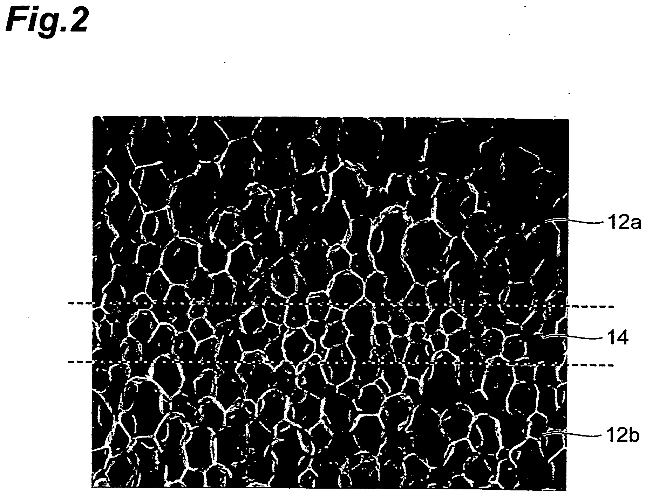

In the present phenolic resin foamed plate, the cell diameter tends to be smaller in a high density portion than in a low density portion. The present phenolic resin foamed plate has a layered structure as illustrated in Fig. 2.

As the average density of the phenolic resin foamed plate, a desired value can be selected depending on such conditions as the proportion of a blowing agent and the oven temperature during curing, and it is preferably in a range of 10 to 100 kg/m$^3$ or less, more preferably in a range of 15 to 60 kg/m$^3$. The case where the average density is less than 10 kg/m$^3$ is undesirable because the mechanical strength such as compressive strength is reduced, a breakage is likely to occur in handling of the foam, and the surface brittleness is increased. The case where the density exceeds 100 kg/m$^3$, heat transmission in the resin portion may increase, the heat insulation performance may be reduced, and in addition, the cost may be increased.

The closed cell ratio (the closed cell ratio is defined as a percentage of the volume of closed cells to the entire volume of closed cells and open cells in the foam) is 80% or more, preferably 90% or more. The closed cell ratio of less than 80% is undesirable because the blowing agent in the phenolic resin foamed plate may be substituted with the air and the heat insulation performance may be reduced.

The thermal conductivity of the phenolic resin foamed plate is preferably 0.015 to 0.023 W/m.k, more preferably 0.015 to 0.021 W/m.k, and further preferably 0.015 to 0.019 W/m.k.

Hydrocarbon may be contained in a cell inside the present phenolic resin foamed plate. When the blowing agent in the foamable phenolic resin composition includes hydrocarbon, this hydrocarbon is contained in a cell inside the foam. The inclusion of hydrocarbon in a cell is preferred because the heat insulation performance of the foamed plate is improved as compared with when the air is contained in a cell.

The thickness of the phenolic resin foamed plate is 60 to 180 mm, preferably 70 to 160 mm, and more preferably 75 to 150 mm.

A method for producing a phenolic resin foamed plate, specifically, a batch-type production method using molds will now be described.

A batch-type method of producing a phenolic resin foamed plate includes the steps of: introducing a foamable phenolic resin composition containing a phenolic resin, a blowing agent, and a curing catalyst into a first mold having an opening, and foaming the introduced phenolic resin composition in the first mold to obtain a foamable phenolic resin composition in a first foaming process; introducing the same or different foamable phenolic resin composition as the foamable phenolic resin composition above into a second mold having an opening, and foaming the introduced foamable phenolic resin composition in the second mold to obtain a foamable phenolic resin composition in a second foaming process; and allowing foaming and curing of the foamable phenolic resin composition in the first foaming process and the foamable phenolic resin composition in the second foaming process to proceed in the first mold and the second mold with the openings of the first and second molds joined, and bonding and integrally curing the foamable phenolic resin compositions to obtain a phenolic resin foamed plate.

In the production method above, the first mold and the second mold being used each have one end open to receive the foamable resin composition. The material of the first and second molds is not specifically limited as long as it can stand the foaming pressure of the foamable resin composition and is less deformable. The materials of the two molds may be different as long as their opening portions match each other. When molds are used, the surfaces that are opposed to the opening portions and onto which the foamable resin composition is discharged (applied) may be affixed with any given surface material in advance or may be applied with a release agent for facilitating removal of the foamed and cured foam from the mold.

Next, the foamable phenolic resin composition is applied to the first mold having one end open. The applied foamable phenolic resin composition starts foaming in the first mold. The foamable phenolic resin composition is applied to the second mold with one end open. The applied foamable phenolic resin composition starts foaming in the second mold. As for the order in which the foamable phenolic resin compositions are applied to the first mold and the second mold, application to the first mold may precede or application to the second mold may precede. When the same foamable phenolic resin composition is used, it is also preferable that the foamable phenolic resin composition is applied to the two molds simultaneously in order to facilitate management and control of the foaming time. The equal amount of foamable resin composition may be applied to each of the two molds, though not being limited to this ratio. When a spatula or the like is used to uniformly apply the foamable resin composition in the mold, the amount of foamable resin composition may be adjusted in advance in consideration of the amount of foamable resin composition adhering to and removed by the spatula.

Then, the opening of the first mold and the opening of the second mold are set to be closed. By closing the openings of the first mold and the second mold, foaming and curing proceeds for each of the foamable phenolic resin composition in the first foaming process in the first mold and the foamable phenolic resin composition in the second foaming process in the second mold, so that the two foamable phenolic resin compositions can be bonded and integrated. When the component of the foamable phenolic resin composition introduced into the first mold differs from that of the formable phenolic resin composition introduced into the second mold, the two foamable phenolic resin compositions are bonded and integrally cured to produce a composite foamed plate having two different properties in one foamed plate.

Thereafter, the first mold and the second mold having their openings joined are put into an oven and heated for a certain time to promote foaming and curing of the foamable phenolic resin composition in the first foaming process and the foamable phenolic resin composition in the second foaming process, whereby a phenolic resin foamed plate can be produced in which the foamable phenolic resin composition in the first foaming process and the foamable phenolic resin composition in the second foaming process are integrated. In this manner, in the present production method, the foamable phenolic resin compositions are applied to the first mold and the second mold separately in the thickness direction, thereby significantly suppressing the effect of the internally generated heat inside the foamable resin composition. Then, the cell membrane of the foamable resin composition is less likely to burst during foaming and curing. As a result, the closed cell ratio and the compressive strength are high, and the bending strength is improved. In addition, the foamed plate with a low thermal conductivity, that is, with a high heat insulation performance, is produced.

A production method in a case where a phenolic resin foamed plate is continuously produced will be described below.

A method for continuously producing a phenolic resin foamed plate is a method of continuously producing a phenolic resin foamed plate having one surface covered with a first surface material and the other surface covered with a second surface material. In this method, a foamable phenolic resin composition containing a phenolic resin, a blowing agent, and a curing catalyst is continuously applied and foamed on opposing surfaces of the first surface material and the second surface material traveling in the same direction at a distance from each other. The surface of the foamable phenolic resin composition in a foaming process which is grown from the first surface material side and the surface of the foamable phenolic resin composition in a foaming process which is grown from the second surface material side are bonded to be integrated and cured as a whole.

The surface material above is preferably a flexible surface material, and , in particular, most preferably a synthetic fiber non-woven fabric or paper in terms of easiness of handling and cost efficiency as a foamed plate, though not being limited thereto.

As long as the first surface material and the second surface material travel in the same direction at a distance from each other, their positional relationship may be vertically parallel or horizontally parallel, and the first surface material and the second surface material should be opposed to each other. It is requested that the prescribed distance should be such a distance that is suitable for the surface of the foamable phenolic resin composition in the foaming process which is grown from the first surface material side and the surface of the foamable phenolic resin composition in the foaming process which is grown from the second surface material side to come into contact with each other and to be bonded with each other and cured to be integrated as a whole. The prescribed distance is determined in consideration of the thickness of the foamed plate as a product.

Continuous application of the foamable phenolic resin composition onto the opposing surfaces of the first surface material and the second surface material is performed at a first discharge port and a second discharge port, respectively. The foamable resin composition is discharged from a discharge port of a die or nozzle. When a die is used, a first die and a second die are each preferably a die that discharges the foamable phenolic resin composition, supplied from a plurality of channels and resided within the die, in the form of a sheet from a die lip discharge port.

In discharge of a foamable resin composition, as disclosed by the applicant in International Publication No. WO2009/066621, a die can be used, whereby a phenolic resin foamed plate with good appearance and properties can be produced easily, extremely accurately, efficiently, and stably for a long time, as compared with conventional methods. Here, the amounts of foamable phenolic resin composition discharged from two dies, namely, the first die and the second die, may be equal or different.

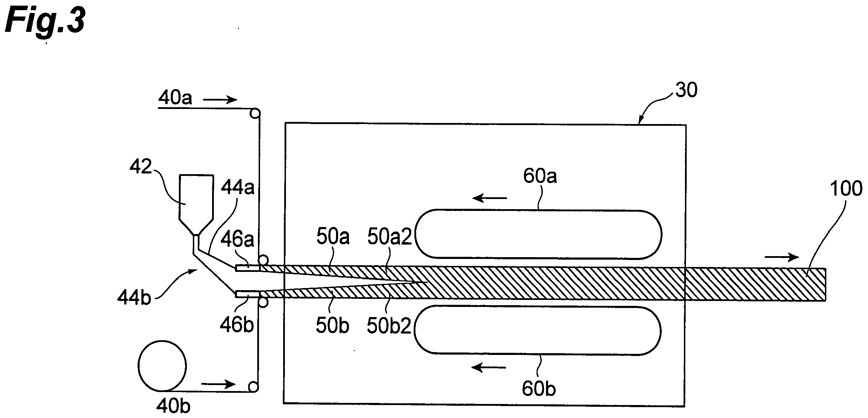

A manner of the production method described above is illustrated in Fig. 3. In the present production method, a first surface material 40a is set at an upper level, and a second surface material 40b is set at a lower level. The first surface material 40a and the second surface material 40b are arranged to be able to travel in the same direction by a slat double conveyor 60a and 60b. A foamable phenolic resin composition is supplied from a mixer 42 to the inside of the die 46a on the upper level through a distribution pipe 44a. Similarly, a foamable phenolic resin composition is supplied to the die 46b on the lower level from the mixer 42 through a distribution pipe 44b. Thereafter, the foamable phenolic resin composition 50a resided within the die of the die 46a is discharged in the form of a sheet from the die 46a onto the surface of the first surface material 40a that is opposed to the second surface material 40b. The foamable phenolic resin composition 50b resided within the die of the die 46b is also discharged in the form of a sheet from the die 46b onto the surface of the second surface material 40b that is opposed to the first surface material 40a. The discharged foamable phenolic resin composition 50a becomes a foamable phenolic resin composition 50a2 in the foaming process which is grown from the first surface material 40a side to the second surface material 40b side. The surface of the foamable phenolic resin composition 50a2 is bonded with the surface of a foamable phenolic resin composition 50b2 in the foaming process, which is the foamable phenolic resin composition 50b grown from the second surface 40b side toward the first surface material 40a side. The foamable phenolic resin composition 50a2 and the foamable phenolic resin composition 50b2 are heated by an oven 30, cured as a whole, and integrated as a phenolic resin foamed plate 100 having both main surfaces covered with the surface materials.

Here, in a case where the foamable phenolic resin composition 50a on the first surface material 40a increases in weight and the first surface material 40a slacks toward the second surface material 40b, a device for holding both ends of the first surface material 40a or a holding device for sucking that surface of the first surface material 40a on which the foamable resin composition 50a is not discharged may be provided as necessary at a required section.

The mixer 42 is preferably the one that can agitate the components described above efficiently for a short time, though not being limited thereto. For example, it is possible to use a structure in which a rotor having a plurality of vanes (protrusions) rotates in a cylindrical container having a plurality of protrusions on an inner wall thereof and the vanes rotate between the protrusions together with the rotation of the rotor without coming into contact with the protrusions, a so-called pin mixer, a Hobart batch mixer, or an Oaks continuous mixer (Japanese Examined Patent Application Publication No. 40-17143).

In the production method above, the molding temperature during foaming and curing is preferably 65°C to 100°C. The temperature less than 65°C is undesirable because the production speed is decreased. The temperature exceeding 100°C is undesirable because the amount of heat generation per unit time inside the foamable resin composition increases and the temperature rises excessively, which makes the cell membrane of the foamable resin composition easily burst during foaming and curing.

As described above, the phenolic resin foamed plate is obtained by foaming and curing the foamable phenolic resin composition including a phenolic resin, a blowing agent, and a curing catalyst. The foamable phenolic resin composition may contain an additive other than the components above in a range that does not impair the effects of the present invention.

Examples of the phenolic resin include a resol-type phenolic resin synthesized with an alkali metal hydroxide or an alkaline earth metal hydroxide, a novolac-type phenolic resin synthesized with an acid catalyst, an ammonia resol-type phenolic resin synthesized with ammonia, and a benzyl ether-type phenolic resin synthesized with lead naphthenate. Among these, the resol-type phenolic resin is preferred.

The resol-type phenolic resin is obtained by using phenol and formalin as raw materials and heating to polymerize them in a temperature range of 40 to 100°C with an alkaline catalyst. An additive such as urea may be added as necessary during the resol resin polymerization. When adding urea, it is preferable to mix a urea which is previously methylolated with an alkaline catalyst with the resol resin. Since the resol resin after synthesis generally contains excessive water, the content of water is controlled to a level suitable to foaming, when the resin is foamed. It is also possible to add, to the phenolic resin, an aliphatic hydrocarbon, an alicyclic hydrocarbon having a high-boiling point, or a mixture thereof, and a diluent for viscosity control such as ethylene glycol and diethylene glycol, and optionally other additives.

The starting molar ratio of phenols to aldehydes in the phenolic resin is preferably in the range of 1:1 to 1:4.5, more preferably in the range of 1:1.5 to 1:2.5. Phenols preferably used in phenolic resin synthesis include phenol itself and other phenols. Examples of other phenols include resorcinol, catechol, o-, m- and p-cresol, xylenols, ethylphenols, p-tert butylphenol, and the like. Binuclear phenols can also be used.

Aldehydes include formaldehyde and other aldehydes. Examples of other aldehydes include glyoxal, acetaldehyde, chloral, furfural, benzaldehyde, and the like. Urea, dicyandiamide, melamine, and the like may be added as additives to aldehydes. When adding these additives, the phenolic resin refers to that after the additives are added.

The blowing agent preferably contains hydrocarbon, though not being limited thereto. This is because its global warming potential is considerably smaller than that of chlorofluorocarbon-based blowing agents. The hydrocarbon content included in the phenolic resin foamed plate is preferably 50% by weight or more, more preferably 70% by weight or more, and specifically preferably 90% by weight or more, on the basis of the whole amount of the blowing agent.

Hydrocarbon contained in the blowing agent is preferably cyclic or chain alkane, alkene, or alkyne each having 3 to 7 carbon atoms. In terms of foamability, chemical stability (not having a double bond), and thermal conductivity of the compound, alkane or cycloalkane each having 4 to 6 carbon atoms are more preferred. Specific examples include normal butane, isobutane, cyclobutane, normal pentane, isopentane, cyclopentane, neopentane, normal hexane, isohexane, 2,2-dimethylbutane, 2,3-dimethylbutane, cyclohexane, and the like. Among them, pentanes including normal pentane, isopentane, cyclopentane, and neopentane, and butanes including normal butane, isobutane, and cyclobutane are especially preferred because their foaming property is satisfactory in production of the phenolic resin foamed plate, and in addition, the thermal conductivity is relatively small.

The hydrocarbons contained in the blowing agent can be used in combination of two or more kinds. Specifically, a mixture of 5 to 95% by weight of pentanes and 95 to 5% by weight of butanes is preferred because it exhibits a good heat insulation property in a wide temperature range. Among them, a combination of normal pentane or isopentane and isobutane is preferred because the foam achieves a high heat insulation performance in a wide range from a low temperature region to a high temperature region, and these compounds are inexpensive. Chlorinated hydrocarbon such as 2-chloropropane may be mixed as the blowing agent. Furthermore, when HFCs with a low bolting point, such as 1,1,1,2-tetrafluoroethane, 1,1-difluoroethane, and pentafluoroethane are used in combination with hydrocarbon as the blowing agent, the low temperature characteristic of the foam can be improved. However, the use of HFCs is not so desirable because the global warming potential of the mixed blowing agent is greater than that of the blowing agent solely using hydrocarbon. Further, a low boiling material such as nitrogen, helium, argon, and air may be added to the blowing agent for use as a foaming nucleating agent. More uniform foaming can be achieved by using particles having mean particle size of 1 mm or less as the foaming nucleating agent.

The curing catalyst is preferably an acid anhydride curing catalyst, though not being limited thereto, because when an acid containing water is used, there is a possibility that rupture of foamable phenolic resin composition cell membrane or the like may take place during foaming and curing. For example, phosphoric anhydride and anhydrous aryl sulfonic acid are preferred. Examples of the anhydrous aryl sulfonic acid include toluenesulfonic acid, xylene sulfonic acid, phenolsulfonic acid, a substituted phenolsulfonic acid, xylenol sulfonic acid, a substituted xylenol sulfonic acid, dodecylbenzenesulfonic acid, benzenesulfonic acid, naphthalene sulfonic acid, and the like, and these may be used singly or in combination of two or more. Resorcinol, cresol, saligenin (o-methylolphenol), p-methylolphenol, and the like may be added as a curing auxiliary. These curing catalysts may be diluted with a solvent such as ethylene glycol and diethylene glycol.

The amount of the acid curing catalyst used differs according to the type, and when phosphoric anhydride is used, it is used in an amount of preferably 5 to 30 parts by weight, more preferably 8 to 25 parts by weight, relative to 100 parts by weight of the phenolic resin. When using a mixture of 60% by weight of para toluene sulfonic acid monohydrate and 40% by weight of diethylene glycol, it is used in an amount of preferably 3 to 30 parts by weight, more preferably 5 to 20 parts by weight, relative to 100 parts by weight of the phenolic resin.

Surfactants generally used in production of a phenolic resin foamed plate can be used. Among those, nonionic surfactants are effective. For example, alkylene oxide which is a copolymer of ethylene oxide and propylene oxide, a condensate of alkylene oxide and castor oil, a condensation product of aklylene oxide and alkylphenol such as nonylphenol or dodecylphenol, polyoxyethylenealkylethers, and in addition, fatty esters such as polyoxyethylene fatty ester, silicone-based compounds such as polydimethylsiloxane, polyalcohols, and the like are preferred. The surfactant may be used singly or in combination of two or more. Although the amount of use is not specifically limited, the surfactant is preferably used in a range of 0.3 to 10 parts by weight per 100 parts by weight of the phenolic resin composition.

## Examples

The present invention will be described in more detail using Examples and Comparative Examples.

(Example 1)

In a reactor, 5000 g of 37% by weight formaldehyde (special grade reagent, available from Wako Pure Chemical Industries, Ltd.) and 3000 g of 99% by weight phenol (special grade reagent, available from Wako Pure Chemical Industries, Ltd.) were charged and agitated by a propeller agitator. The temperature in the reactor was adjusted to 40°C by a temperature controller. Then, 50% by weight of an aqueous solution of sodium hydroxide was added in an amount of 60 g, and the temperature of the reaction liquid was raised from 40°C up to 85°C, which was maintained for 110 minutes. Then, the reaction liquid was cooled to 5°C. The resultant reaction liquid was designated as phenolic resin A. Meanwhile, 1080 g of 37% by weight formaldehyde, 1000 g of water, and 78 g of 50% by weight of an aqueous solution of sodium hydroxide were added to another reactor, and 1600 g of urea (special grade reagent, available from Wako Pure Chemical Industries, Ltd.) was added thereto, followed by agitation with a propeller agitator. The liquid temperature in the reactor was adjusted to 40°C by a temperature controller. The temperature of the reaction liquid was raised from 40°C up to 70°C, which was maintained for 60 minutes. The resulting reaction liquid was designated methylolurea U. Next, 8060 g of phenolic resin A was mixed with 1350 g of methylolurea U, and the liquid temperature was raised to 60°C, which was maintained for one hour. The reaction liquid was then cooled to 30°C. The reaction liquid was neutralized to pH 6 with 50% by weight of an aqueous solution of para toluene sulfonic acid monohydrate. The reaction liquid was dehydrated at 60°C. The viscosity and water content of the reaction liquid were measured. Then, the viscosity at 40°C was 5700 mPa·s, and the water content was 5% by weight. This was designated as phenolic resin A-U-1.

Next, a block copolymer of ethylene oxide-propylene oxide (BASF, trade name "Pulronic F127") was mixed as a surfactant in an amount of 4 parts by weight relative to 100 parts by weight of phenolic resin A-U-1, resulting in a phenolic rein composition B. Then, 7 parts by weight of normal pentane as a blowing agent, and 10 parts by weight of a mixture of 80% by weight of xylene sulfonic acid (TAYCA CORPORATION, trade name "TAYCATOX 110") and 20% by weight of diethylene glycol as a curing catalyst, relative to 100 parts by weight of the phenolic resin composition B, were continuously supplied to a pin mixer with a temperature controller jacket and agitated uniformly. The mold was designed to be able to discharge the water content produced during a curing reaction to the outside. A mold of 30 mm thick x 170 mm x 170 mm was prepared as the first mold, in which polyester non-woven fabric (manufactured by ASAHI KASEI FIBERS CORPORATION, "Spunbond E05030," measured weight 30 g/m$^2$, thickness 0.15 mm) was affixed as a surface material on the inside in advance. In addition, a mold of 60 mm thick x 170 mm x 170 mm (two molds each 30 mm x 170 mm x 170 mm were piled up) was prepared as a second mold, in which polyester non-woven fabric (manufactured by ASAHI KASEI FIBERS CORPORATION, "Spunbond E05030," measured weight 30 g/m$^2$, thickness 0.15 mm) was affixed as a surface material on the inside in advance. The foamable phenolic resin composition, which was a mixture coming from the mixer, was applied in an amount of 38 g to each of the first and second molds and smoothed evenly by a spatula. Thereafter, the openings of the first and second molds were joined such that the foaming space was 90 mm. The molds are held in an oven at 80°C for one hour. A phenolic resin foamed plate of 90 mm thick x 170 mm long x 170 mm wide was thus obtained.

(Example 2)

A foamed plate was obtained in a similar manner as Example 1 except that the mixture of 80% by weight of xylene sulfonic acid and 20% by weight of diethylene glycol was added as a curing catalyst in an amount of 6 parts by weight, and the oven temperature was set to 75°C.

(Example 3)

A foamed plate was obtained in a similar manner as Example 1 except that the mixture of 80% by weight of xylene sulfonic acid and 20% by weight of diethylene glycol was added as a curing catalyst in an amount of 14 parts by weight, and the oven temperature was set to 83°C.

(Example 4)

A foamed plate was obtained in a similar manner as Example 1 except that the mixture of 80% by weight of xylene sulfonic acid and 20% by weight of diethylene glycol was added as a curing catalyst in an amount of 15 parts by weight, and the oven temperature was set to 86°C.

(Example 5)

A foamed plate was obtained in a similar manner as Example 1 except that the mixture of 80% by weight of xylene sulfonic acid and 20% by weight of diethylene glycol was added as a curing catalyst in an amount of 5 parts by weight, and the oven temperature was set to 68°C.

(Example 6)

In a reactor, 350 kg of 52% by weight formaldehyde and 251 kg of 99 % by weight phenol were charged and agitated by a propeller agitator. The liquid temperature in the reactor was adjusted to 40°C by a temperature controller. Then, while adding 50% by weight of an aqueous solution of sodium hydroxide, the temperature is raised to allow the liquid to react. At the stage when the Ostwald viscosity reached 60 centistokes (= 60 x $10^{-6}$m$^2$/s, measured value at 25°C), the reaction liquid was cooled, and 57 kg of urea (corresponding to 15 mol% of the amount of formaldehyde charged) was added thereto. Subsequently, the reaction liquid was cooled to 30°C and neutralized to a pH of 6.4 with 50% by weight of an aqueous solution of para toluene sulfonic acid monohydrate. The reaction liquid was dehydrated at 60°C. The viscosity of the resultant product was measured. Then, the viscosity at 40°C was 5600 mPa·s. This was designated as phenolic resin A-U-2.

Next, a block copolymer of ethylene oxide-propylene oxide was mixed as a surfactant in an amount of 4.0 parts by weight relative to 100 parts by weight of the phenolic resin A-U-2, resulting in a phenolic resin composition C. Then, a composition D made of 6 parts by weight of a mixture of 50% by weight of isopentane and 50% by weight of isobutane as a blowing agent and 13 parts by weight of a mixture of 80% by weight of xylene sulfonic acid and 20% by weight of diethylene glycol as a curing catalyst, relative to 100 parts by weight of the phenolic resin composition C, was supplied to a mixing head having the temperature controlled to 25°C and supplied to the lower surface of the moving upper surface material and the upper surface of the moving lower surface material almost simultaneously through a multiport distribution pipe. The mixer used was structurally of the same type as the one disclosed in Japanese Patent Application Laid-Open Publication No. 10-225993. More specifically, the mixer has an inlet port for a phenolic resin composition and a blowing agent composition on the upper side surface thereof and an inlet port for a curing catalyst on the side surface thereof in the vicinity of the center of an agitation portion in which the rotor agitates. The portion following the agitation portion leads to a nozzle for discharging the foamable resin composition. A distribution portion at the lower portion is designed to have a plurality of nozzles at the tip end and such that the mixed foamable resin composition is evenly distributed. The mixing portion and the distribution portion are each provided with a temperature control jacket to allow temperature adjustment. The equal number (twelve) of distribution pipes are arranged for each of the opposing surfaces of the two surface materials. The foamable phenolic resin composition D kneaded by the mixer was supplied to the surface materials separately. There is provided a mechanism for adjusting downward slack in the upper surface material on which the composition D has been discharged, while keeping a distance from the lower surface material under its own weight, so that the upper surface material did not come into contact with the lower surface material after discharging. Polyester non-woven fabric (manufactured by ASAHI KASEI FIBERS CORPORATION, "Spunbond E05030," measured weight 30 g/m$^2$, thickness 0.15 mm) was used as the surface material. The foamable resin composition coming from the mixer was sent to a double conveyor at 80°C so as to be sandwiched between the surface materials while the foamable resin composition was foamed. The foamable resin composition was cured for a 15-minute residence time and thereafter cured for two hours in an oven at 110°C. A phenolic resin foamed plate having a thickness of 90 mm was thus obtained.

(Example 7)

A composition made of a mixture of 50% by weight of isopentane and 50% by weight of isobutane as a blowing agent in an amount of 6 parts by weight, and a mixture of 80% by weight of xylene sulfonic acid and 20% by weight of diethylene glycol as a curing catalyst in an amount of 13 parts by weight, relative to 100 parts by weight of the same phenolic resin composition C as Example 4, were supplied to a mixing head having a temperature controlled to 25°C. Of 24 channels distributed from the mixing portion through a dedicated tournament-type distribution pipe, 12 channels are supplied to that surface of the upper, first surface material which is opposed to the lower, second surface material, and the other 12 channels are supplied to that surface of the lower, second surface material which is opposed to the upper, first surface material. At the tip ends of the channels, a die for the upper surface material lower surface discharge and a die for the lower surface material upper surface discharge are installed. The channels are connected to the intake ports of these two dies at prescribed intervals.

The die is configured with five surfaces, namely, top surface, bottom surface, both side surfaces, and rear surface, and has a space open only at the front serving as the discharge side, and a plurality of channels distributed from the mixing portion are connected to the rear surface serving as the inlet side (material: SUS 304, die lip discharge port width: L = 1000 mm, the length in the die flow direction: D = 150 mm, die lip discharge port interval: t = 3.5 mm). The foamable resin composition D was fed into each die from the channels connected to the inlet port, and the foamable resin composition D was discharged in the form of a sheet from the die lip discharge port to be supplied almost simultaneously to the lower surface of the moving upper surface material and the upper surface of the moving lower surface material. In other words, the composition D kneaded by the mixer is separately supplied to that surface of the upper, first surface material which is opposed to the second surface material and to that surface of the lower, second surface material which is opposed to the first surface material. There is provided a mechanism for adjusting downward slack in the first surface material on which the composition D has been discharged, while keeping a distance from the second surface material under its own weight, and does not come into contact with the second surface material after discharging. Polyester non-woven fabric (manufactured by ASAHI KASEI FIBERS CORPORATION, "Spunbond E05030," measured weight 30 g/m$^2$, thickness 0.15 mm) was used as the surface material.

Thereafter, the composition D was continuously supplied and cured in the oven under similar conditions as in Example 6. A phenolic resin foamed plate having a thickness of 90 mm was thus obtained.

(Example 8) (for reference only)

A foamed plate was obtained in a similar manner as Example 2 except that the foamable phenolic resin composition, which was the mixture coming from the mixer, was applied in an amount of 50.6 g in the first mold and in an amount of 25.3 g in the second mold, and the oven temperature was set to 70°C.

(Example 9) (for reference only)

A foamed plate was obtained in a similar manner as Example 4 except that the foamable phenolic resin composition, which was the mixture coming from the mixer, was applied in an amount of 50.6 g in the first mold and in an amount of 25.3 g in the second mold.

(Comparative Example 1)

A foamed plate was obtained in a similar manner as Example 1 except that the mixture coming from the mixer was applied in an amount of 76 g on a surface on the bottom face in a mold of 90 mm thick x 170 mm x 170 mm (three molds each 30 mm x 170 mm x 170 mm were piled up), in which polyester non-woven fabric (manufactured by ASAHI KASEI FIBERS CORPORATION, "Spunbond E05030," measured weight 30 g/m$^2$, thickness 0.15 mm) was affixed as a surface material on the inside in advance, the applied mixture was evenly smoothed by a spatula, and the oven temperature was thereafter set to 70°C.

(Comparative Example 2)

A foamed plate was obtained in a similar manner as Example 1 except that the mixture coming from the mixer was applied in an amount of 76 g on a surface on the bottom face in a mold of 90 mm thick x 170 mm x 170 mm (three molds each 30 mm x 170 mm x 170 mm were piled up), in which polyester non-woven fabric (manufactured by ASAHI KASEI FIBERS CORPORATION, "Spunbond E05030," measured weight 30 g/m$^2$, thickness 0.15 mm) was affixed as a surface material on the inside in advance.

(Comparative Example 3)

A foamed plate having a thickness of 90 mm was obtained in a similar manner as Example 6 except that 24 nozzles are arranged at the tip end of the distribution portion at the lower portion of the mixer being used, and the composition D kneaded by the mixer was entirely applied to the lower surface material, sent to a double conveyor at 80°C, and cured for a 15-minute residence time.

(Comparative Example 4)

The mixture coming from the mixer was applied in an amount of 38 g on a surface on the bottom face in a mold of 90 mm thick x 170 mm x 170 mm (three molds each 30 mm x 170 mm x 170 mm were piled up), in which polyester non-woven fabric (manufactured by ASAHI KASEI FIBERS CORPORATION, "Spunbond E05030," measured weight 30 g/m$^2$, thickness 0.15 mm) was affixed as a surface material on the inside in advance. The applied mixture was evenly smoothed by a spatula, and then, the oven temperature set to 80°C was maintained for 30 minutes, thereby forming a foamed plate. The mixture coming from the mixer was additionally applied in an amount of 38 g on the foamed plate and evenly smoothed by a spatula. Thereafter, the oven temperature set to 80°C was maintained for additionally 30 minutes. A foamed plate in which two layers were stacked was thus obtained.

The evaluation items and evaluation methods concerning the composition, structure, and characteristics of the phenolic resin foamed plates produced in the foregoing Examples and Comparative Examples were as follows.

[Density]

The density of the phenolic resin foamed plate as a whole was a value obtained by using a foamed plate of 20 cm square as a sample, removing the surface material of the sample, and measuring the weight and apparent volume of the sample. The measurement was performed in conformity with JIS-K-7222.

A sample cut out into a part of 75 mm wide, 75 mm long, with the original thickness, was sliced into five equal parts in the thickness direction. The resultant pieces were designated as P1, P2, P3, P4, and P5 in order from one main surface, and the average density $d_{p2}$ of P2, the average density $d_{p3}$ of P3, and the average density $d_{p4}$ of P4 were measured, excluding P1 and P5 that include the main surfaces.

[Evaluation of Void Area of Foamed Plate]

For the foamed plates in Examples 1 to 9 and Comparative Examples 1 to 4, an operation similar to the operation of slicing into five equal parts in the thickness direction was repeated three times. Three pieces P3 were thus prepared.

The total area of voids of 2 mm$^2$ or larger in four cross sections of each of the three pieces P3 was determined. When it was difficult to recognize voids of 2 mm$^2$ or larger, a 200% enlarged copy was produced as appropriate for evaluation, which was converted into the equivalent in the original scaling.

[Closed Cell Ratio]

A cylindrical sample having a diameter of 35 mm to 36 mm was hollowed out of a foamed plate by a cork borer and cut to a height of 30 mm to 40 mm. Then, the sample volume was measured according to a standard method for using an air comparison-type densimeter (Type 1000, manufactured by Tokyo Science Co., Ltd.). The sample located at the central portion in the thickness direction of the foamed plate was prepared. The value obtained by subtracting the volume of the cell wall calculated from the sample weight and the resin density, from the sample volume was divided by an apparent volume calculated from the outer dimensions of the sample, and the resultant value was the closed cell ratio, which was measured according to ASTM-D-2856. Here, in the case of the phenolic resin, the density thereof was set to 1.3 kg/L.

[Thermal Conductivity]

A foamed plate of 200 mm square was sliced in the thickness direction along one main surface, and the thickness of 50 mm at the central portion in the thickness was extracted as a sample, which was measured in accordance with a flat plate heat flow meter method of JIS-A-1412 between a lower temperature plate at 5°C and a higher temperature plate at 35°C. A foamed plate having a thickness less than 50 mm was not sliced in the thickness direction and was subjected to measurement as it was.

[Compressive strength]

The compressive strength was measured in accordance with JIS K7220 (a compressive strength and a deformation ratio corresponding to the compressive strength of a hard foam plastic: compression stress at 10% deformation).
The production conditions of the foamed plates obtained from the foregoing Examples and Comparative Examples are summarized in Table 1.

[Table 1]

| | molding method | use of die | upper surface discharge (application) | lower surface discharge (application) | application ratio (wt%, upper surface/lower surface) | blowing agent kind | blowing agent (parts by weight) | catalyst (parts by weight) | oven temperature (°C) | oven heating time (min) |
|---|---|---|---|---|---|---|---|---|---|---|
| Example 1 | mold | no | yes | yes | 50/50 | normal pentane | 7 | 10 | 80 | 60 |
| Example 2 | mold | no | yes | yes | 50/50 | normal pentane | 7 | 6 | 75 | 60 |
| Example 3 | mold | no | yes | yes | 50/50 | normal pentane | 7 | 14 | 83 | 60 |
| Example 4 | mold | no | yes | yes | 50/50 | normal pentane | 7 | 15 | 86 | 60 |
| Example 5 | mold | no | yes | yes | 50/50 | normal pentane | 7 | 5 | 68 | 60 |
| Example 6 | continuous | no | yes | yes | 50/50 | isopentane/isobutane | 6 | 13 | 80 | 15 |
| Example 7 | continuous | yes | yes | yes | 50/50 | isopentane/isobutane | 6 | 13 | 80 | 15 |
| Example 8* | mold | no | yes | yes | 33/67 | normal pentane | 7 | 6 | 70 | 60 |
| Example 9* | mold | no | yes | yes | 33/67 | normal pentane | 7 | 15 | 86 | 60 |
| Comp. Ex. 1 | mold | no | no | yes | - | normal pentane | 7 | 10 | 70 | 60 |
| Comp. Ex. 2 | mold | no | no | yes | - | normal pentane | 7 | 10 | 80 | 60 |
| Comp. Ex. 3 | continuous | no | no | yes | - | isopentane/isobutane | 6 | 13 | 80 | 15 |
| Comp. Ex. 4 | mold | no | no | yes (twice) | - | normal pentane | 6 | 10 | 80 | 60 |

* for reference

Then, the evaluation results of the foamed plates obtained from the foregoing Examples and Comparative Examples are shown in Table 2. Total evaluation as follows was conducted for the physical properties of the resultant foam products. The compressive strength was evaluated for the one in which the average density of the phenolic resin foam as a whole was 23.5 to 24.5 kg/m$^3$. The one in which the value of compressive strength was 10 N/cm$^2$ or more was evaluated as a non-defective product.

OK : the average density of the phenolic resin foamed plate as a whole is 23.5 to 24.5 kg/m$^3$ and the compressive strength is 10 N/cm$^2$ or more.

NG : the average density of the phenolic resin foamed plate as a whole is 23.5 to 24.5 kg/m$^3$ and the compressive strength is less than 10 N/cm$^2$.

[Table 2]

| | total area of voids (mm$^2$) | $d_{p2}/d_{p3}$ | $d_{p4}/d_{p3}$ | density (kg/m$^3$) | compressive strength (N/cm$^2$) | closed cell ratio (%) | thermal conductivity (W/mK) | total evaluation |
|---|---|---|---|---|---|---|---|---|
| Example 1 | 5 | 0.95 | 0.94 | 23.9 | 13.1 | 97.1 | 0.020 | OK |
| Example 2 | 25 | 0.96 | 0.95 | 24.0 | 11.8 | 96.9 | 0.020 | OK |
| Example 3 | 13 | 0.93 | 0.93 | 24.0 | 13.0 | 91.7 | 0.021 | OK |
| Example 4 | 17 | 0.92 | 0.91 | 24.1 | 12.6 | 83.2 | 0.023 | OK |
| Example 5 | 28 | 0.99 | 0.98 | 23.9 | 10.3 | 95.8 | 0.021 | OK |
| Example 6 | 6 | 0.94 | 0.94 | 24.2 | 14.5 | 96.8 | 0.020 | OK |
| Example 7 | 3 | 0.94 | 0.94 | 24.0 | 14.8 | 96.9 | 0.020 | OK |
| Example 8* | 22 | 1.02 | 1.01 | 24.1 | 10.4 | 95.3 | 0.021 | OK |
| Example 9* | 19 | 1.02 | 1.01 | 23.9 | 11.9 | 82.7 | 0.023 | OK |
| Comp. Ex. 1 | 9 | 1.02 | 1.02 | 23.5 | 8.3 | 81.2 | 0.024 | NG |
| Comp. Ex. 2 | 5 | 1.04 | 1.03 | 24.2 | 9.5 | 79.1 | 0.025 | NG |
| Comp. Ex. 3 | 3 | 1.03 | 1.03 | 24.1 | 7.8 | 77.6 | 0.025 | NG |
| Comp. Ex. 4 | 81 | 1.05 | 1.05 | 23.9 | 6.6 | 57.7 | 0.026 | NG |
| * for reference | | | | | | | | |

## Industrial Applicability

The present invention provides a phenolic resin foamed plate exhibiting practically sufficient compressive strength and thermal conductivity even when the product thickness is increased, and a method for producing the same.

## Reference Signs List

12a, 12b... large cell structural layer, 14... small cell structural layer, 20a, 20b... straight line parallel with the axis of abscissas, 40a... first surface material, 40b... second surface material, 42... mixer, 44a, 44b... distribution pipe, 46a, 46b... die, 50... foamable resin composition, 60... slat double conveyor.

## Claims

1.  A phenolic resin foamed plate having a closed cell ratio equal to or greater than 80% and having a thickness of 60 to 180 mm, wherein
    when the phenolic resin foamed plate is cut along a main surface of the phenolic resin foamed plate in a thickness direction into five equal parts, which are designated as P1, P2, P3, P4, and P5 in order from the main surface, an average density $d_{p3}$ of P3 is higher than either of an average density $d_{p2}$ of P2 and an average density $d_{p4}$ of P4.

2.  The phenolic resin foamed plate according to claim 1, wherein the total area of cells of 2 mm$^2$ or larger in a cross section vertical to the main surface of P3 is equal to or smaller than 70 mm$^2$/900 mm width.

3.  The phenolic resin foamed plate according to claim 1 or 2, wherein the average density of the phenolic resin foamed plate as a whole is 10 to 100 kg/m$^3$.

4.  The phenolic resin foamed plate according to any one of claims 1 to 3, wherein the thermal conductivity is 0.015 to 0.023 W/m.k.

5.  The phenolic resin foamed plate according to any one of claims 1 to 4, wherein hydrocarbon is contained in a cell inside the phenolic resin foamed plate.

6.  A method for producing a phenolic resin foamed plate according to any one of claims 1 to 5, comprising:

    a step of introducing a foamable phenolic resin composition containing a phenolic resin, a blowing agent, and a curing catalyst into a first mold having an opening, and foaming the introduced phenolic resin composition in the first mold to obtain a foamable resin composition in a first foaming process;
    a step of introducing a foamable phenolic resin composition same as the foamable phenolic resin composition or a foamable phenolic resin composition different from the foamable phenolic resin composition into a second mold having an opening, and foaming the introduced phenolic resin composition in the second mold to obtain a foamable resin composition in a second foaming process; and
    a step of allowing foaming and curing of the foamable phenolic resin compositions in the first and second foaming processes to proceed in the first and second molds with the openings of the first and second molds joined, and bonding each foamable phenolic resin composition, integrating, and curing the integrated foamable phenolic resin composition to obtain a phenolic resin foamed plate.

7.  A method for producing a phenolic resin foamed plate according to any one of claims 1 to 5, having one surface covered with a first surface material and another surface covered with a second surface material, the method comprising:

    continuously applying and foaming a foamable phenolic resin composition containing a phenolic resin, a blowing agent, and a curing catalyst on opposing surfaces of the first and second surface materials traveling in a same direction at a prescribed distance from each other, and bonding a foamable resin composition surface in a foaming process that is grown from the first surface material side and a foamable resin composition surface in a foaming process that is grown from the second surface material side to each other to be integrated as a whole and cured.

8.  The method for producing a phenolic resin foamed plate according to claim 7, wherein continuous application of the foamable phenolic resin compositions on the opposing surfaces of the first and second surface materials is performed in first and second dies, respectively, and
    the first and second dies are each a die for discharging the foamable phenolic resin composition, supplied from a plurality of channels and resided within the die, in a shape of a sheet from a die lip discharge port.

**Patentansprüche**

1. Geschäumte Phenolharzplatte mit einem Anteil an geschlossenen Zellen von 80% oder mehr und einer Dicke von 60 bis 180 mm, wobei, wenn die geschäumte Phenolharzplatte entlang einer Hauptoberfläche der geschäumten Phenolharzplatte in Dickenrichtung in fünf gleiche Teile geschnitten wird, die als P1, P2, P3, P4 und P5 in der Reihenfolge von der Hauptoberfläche aus bezeichnet werden, die mittlere Dichte $d_{p3}$ von P3 höher ist als die mittlere Dichte $d_{p2}$ von P2 und die mittlere Dichte $d_{p4}$ von P4.

2. Geschäumte Phenolharzplatte nach Anspruch 1, wobei die Gesamtfläche von Zellen mit 2 mm$^2$ oder größer in einem Querschnitt vertikal zu der Hauptoberfläche von P3 70 mm$^2$/900 mm Breite oder kleiner ist.

3. Geschäumte Phenolharzplatte nach Anspruch 1 oder 2, wobei die mittlere Dichte der geschäumten Phenolharzplatte als Ganzes 10 bis 100 kg/m$^3$ ist.

4. Geschäumte Phenolharzplatte nach einem der Ansprüche 1 bis 3, wobei die thermische Leitfähigkeit 0,015 bis 0,023 W/m·k ist.

5. Geschäumte Phenolharzplatte nach einem der Ansprüche 1 bis 4, wobei Kohlenwasserstoff in einer Zelle im Inneren der geschäumten Phenolharzplatte enthalten ist.

6. Verfahren zum Herstellen einer geschäumten Phenolharzplatte nach einem der Ansprüche 1 bis 5, welches umfasst:

   eine Stufe, in der eine schäumbare Phenolharzzusammensetzung, die ein Phenolharz, ein Treibmittel und einen Härtungskatalysator enthält, in eine erste Form mit einer Öffnung eingeführt wird und die eingeführte Phenolharzzusammensetzung in der ersten Form geschäumt wird, wobei eine schäumbare Harzzusammensetzung in einem ersten Schäumungsprozess erhalten wird;
   eine Stufe, in der eine schäumbare Phenolharzzusammensetzung, die identisch ist mit der schäumbaren Phenolharzzusammensetzung, oder eine schäumbare Phenolharzzusammensetzung, die sich von der schäumbaren Phenolharzzusammensetzung unterscheidet, in eine zweite Form mit einer Öffnung gegeben wird und die eingeführte Phenolharzzusammensetzung in der zweiten Form geschäumt wird, wobei eine schäumbare Harzzusammensetzung in einem zweiten Schäumungsprozess erhalten wird; und
   eine Stufe, in der zugelassen wird, dass das Schäumen und Härten der schäumbaren Phenolharzzusammensetzungen in dem ersten und dem zweiten Schäumungsprozess in der ersten und der zweiten Form fortschreiten, wobei die Öffnungen der ersten und der zweiten Form verbunden sind, und die schäumbaren Phenolharzzusammensetzungen verbunden und integriert werden und die integrierte schäumbare Phenolharzzusammensetzung gehärtet wird, wobei eine geschäumte Phenolharzplatte erhalten wird.

7. Verfahren zum Herstellen einer geschäumten Phenolharzplatte nach einem der Ansprüche 1 bis 5, wobei eine Oberfläche mit einem ersten Oberflächenmaterial und eine weitere Oberfläche mit einem zweiten Oberflächenmaterial bedeckt ist, wobei das Verfahren folgende Stufen umfasst:

   das kontinuierliche Auftragen und Schäumen einer schäumbaren Phenolharzzusammensetzung, die ein Phenolharz, ein Treibmittel und einen Härtungskatalysator enthält, auf gegenüberliegende Oberflächen des ersten und des zweiten Oberflächenmaterials, die sich mit vorgegebenem Abstand voneinander in der gleichen Richtung bewegen, und das Verbinden einer schäumbaren Harzzusammensetzungsoberfläche in einem Schäumungsverfahren, wobei die Oberfläche von der ersten Oberflächenmaterialseite aus wächst, und einer schäumbaren Harzzusammensetzungsoberfläche in einem Schäumungsverfahren, wobei die Oberfläche von der zweiten Oberflächenmaterialseite aus wächst, miteinander, so dass die Oberflächen als Ganzes integriert und gehärtet werden.

8. Verfahren zum Herstellen einer geschäumten Phenolharzplatte nach Anspruch 7, wobei das kontinuierliche Auftragen der schäumbaren Phenolharzzusammensetzungen auf gegenüberliegende Oberflächen des ersten und des zweiten Oberflächenmaterials in jeweiligen ersten und zweiten Düsen durchgeführt wird und die erste und die zweite Düse jeweils eine Düse zum Ausstoßen der schäumbaren Phenolharzzusammensetzung, die von einer Vielzahl von Kanälen zugeführt wurde und innerhalb der Düse verblieb, in Form einer Bahn von einer Düsenlippenausstoßöffnung sind.

## Revendications

1. Plaque expansée de résine phénolique ayant un rapport de cellules fermées égal ou supérieur à 80 % et ayant une épaisseur de 60 à 180 mm, dans laquelle

   quand la plaque expansée de résine phénolique est découpée le long d'une surface principale de la plaque expansée de résine phénolique dans le sens de l'épaisseur en cinq parts égales, qui sont désignées par P1, P2, P3, P4 et P5, dans l'ordre, depuis la surface principale, une densité moyenne $d_{p3}$ de P3 est supérieure soit à une densité moyenne $d_{p2}$ de P2, soit à une densité moyenne $d_{p4}$ de P4.

2. Plaque expansée de résine phénolique selon la revendication 1, dans laquelle la superficie totale des cellules de 2 $mm^2$ ou plus, en coupe transversale, verticalement à la surface principale de P3 est égale ou inférieure à 70 $mm^2$/900 mm de large.

3. Plaque expansée de résine phénolique selon la revendication 1 ou 2, dans laquelle la densité moyenne de la plaque expansée de résine phénolique dans son ensemble est de 10 à 100 $kg/m^3$.

4. Plaque expansée de résine phénolique selon l'une quelconque des revendications 1 à 3, dans laquelle la conductivité thermique est de 0,015 à 0,023 W/m.k.

5. Plaque expansée de résine phénolique selon l'une quelconque des revendications 1 à 4, dans laquelle un hydrocarbure est contenu dans une cellule à l'intérieur de la plaque expansée de résine phénolique.

6. Procédé de production d'une plaque expansée de résine phénolique selon l'une quelconque des revendications 1 à 5, comprenant :

   une étape consistant à introduire une composition de résine phénolique expansible contenant une résine phénolique, un agent soufflant, et un catalyseur de durcissement dans un premier moule doté d'une ouverture, et mousser la composition de résine phénolique introduite dans le premier moule afin d'obtenir une composition de résine expansible dans un premier procédé de moussage ;
   une étape consistant à introduire une composition de résine phénolique expansible identique à la composition de résine phénolique expansible ou une composition de résine phénolique expansible différente de la composition de résine phénolique expansible dans un second moule doté d'une ouverture, et mousser la composition de résine phénolique introduite dans le second moule afin d'obtenir une composition de résine expansible dans un second procédé de moussage ; et
   une étape consistant à permettre le moussage et le durcissement des compositions de résine phénoliques expansibles dans le premier et le second procédés de moussage dans le premier et le second moules avec les ouvertures du premier et du second moules reliées, et en liant chaque composition de résine phénolique expansible, en intégrant et en durcissant la composition de résine phénolique expansible intégrée pour obtenir une plaque expansée de résine phénolique.

7. Procédé de production d'une plaque expansée de résine phénolique selon l'une quelconque des revendications 1 à 5, ayant une surface recouverte d'un premier matériau de surface et une autre surface recouverte d'un second matériau de surface, le procédé comprenant :

   l'application continue et le moussage d'une composition de résine phénolique expansible contenant une résine phénolique, un agent soufflant, et un catalyseur de durcissement sur des surfaces opposées du premier et du second matériaux de surface se déplaçant dans une même direction, à une distance prescrite l'une de l'autre, et la liaison d'une surface de composition de résine expansible dans un procédé de moussage, qui est développé depuis le côté du premier matériau de surface et une surface de composition de résine expansible dans un procédé de moussage, qui est développé depuis le second côté du matériau de surface, l'un vers l'autre, à intégrer dans son ensemble et à durcir.

8. Procédé de production d'une plaque expansée de résine phénolique selon la revendication 7, dans lequel l'application continue des compositions de résine phénoliques expansibles sur les surfaces opposées du premier et du second matériaux de surfaces est effectuée dans une première et une seconde filières, respectivement, et
   la première et la seconde filières sont chacune une filière pour décharger la composition de résine phénolique expansible, fournie à partir d'une pluralité de canaux et résidant dans une filière, en forme de feuille depuis un orifice de déchargement de lèvre de la filière.

**Fig.1**

EP 2 514 786 B1

**Fig.2**

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4141406 A
- JP 3243571 B
- US 3511789 A
- JP 59005038 A
- WO 2009066621 A
- JP 4017143 B
- JP 10225993 A